# FASCICULE DE BREVET EUROPEEN

(11) **EP 1 970 577 B1**
(45) Date de publication et mention de la délivrance du brevet: **01.01.2014**
(21) Numéro de dépôt: 08101333.6
(22) Date de dépôt: 06.02.2008
(51) Int. Cl.: F16C 19/16, F16C 19/38, F16C 19/54, F16C 33/64

(54) **Procédé de fabrication de roulements à double rangée de billes et roulements correspondants.**
Herstellungsverfahren von Doppelkugellagern und entsprechenden Kugellager.
Method for manufacturing of double ball bearings and corresponding ball bearings.

(30) Priorité: 16.03.2007 FR 0753888
(43) Date de publication de la demande: 17.09.2008
(73) Titulaire: Aktiebolaget SKF, 415 50 Göteborg (SE)
(72) Inventeur: Lepage, Alain, 37230, FONDETTES (FR); Coquier, Benoît, 37540, SAINT CYR SUR LOIRE (FR)
(74) Mandataire: Casalonga, Axel

(56) Documents cités:
- EP-A- 1 208 810
- US-A- 2 972 841
- DATABASE WPI Week 200621 Derwent Publications Ltd., London, GB; AN 2006-195684 XP002455610 -& CN 1 696 525 A (LUOYANG BEARING GROUP CO LTD) 16 novembre 2005 (2005-11-16)

## Description

L'invention concerne le domaine des paliers à roulement à jeu réduit ou nul, comprenant une paire de roulements rigides à simple rangée de billes.

Un roulement rigide à simple rangée de billes également appelé « roulement à billes à gorge profonde », comprend une bague extérieure et une bague extérieure, chacune pourvue d'une gorge circulaire toroïdale formant chemin de roulement. Des billes sont disposées entre les chemins de roulement et sont maintenues à espacement circonférentiel régulier par une cage. Les bagues extérieures et les bagues intérieures ont des largeurs nominales identiques. On entend par largeur, la dimension axiale d'une surface radiale frontale à l'autre. Le roulement est monté avec un certain jeu interne, radial et axial, qui dépend du diamètre des fonds de gorge des bagues, du diamètre des billes, et du rayon des chemins de roulement en section droite par un plan axial. Le jeu interne du roulement se traduit par la possibilité d'un léger déplacement radial ou axial d'une bague par rapport à l'autre sous l'action d'un effort radial ou axial exercé sur l'une des bagues. C'est ainsi que pour un diamètre de billes donné, le jeu radial et axial d'un roulement augmente si le rayon des gorges est augmenté, si le diamètre en fond de gorge de la bague extérieure est augmenté et si le diamètre en fond de gorge de la bague intérieure est diminué.

Dans certaines applications dans lesquelles on souhaite former un palier à roulement capable de supporter dans un espace réduit des charges à la fois radiales et axiales, on peut être amené à utiliser des roulements à billes à gorge profonde par paires fonctionnant en contact oblique.

On fabrique et sélectionne alors des roulements qui, lorsqu'ils sont disposés côte à côte et face contre face forment un ensemble qui présente un jeu axial voisin de zéro et un certain angle de contact entre les billes et les chemins de roulement afin de pouvoir fonctionner en supportant à la fois une charge radiale et une certaine charge axiale.

Suivant l'orientation des angles de contact, le montage des paires de roulement sera dit en « O » ou en « X ».

Dans un appariement en « O », les lignes joignant les points de contact entre les billes et les chemins de roulement forment alors un « O » plus ou moins ellipsoïdal. Les droites qui joignent les points de contact billes/chemins de roulement se coupent en quatre points, deux sur l'axe des roulements et deux en dehors de l'axe. A l'inverse, dans un appariement dit en « X », les points de contact des billes avec les chemins de roulement forment un « X », c'est-à-dire que les droites qui joignent les points de contact billes/chemins de roulement convergent les unes vers les autres quand on se rapproche de l'axe des roulements. L'ensemble ainsi formé forme un palier à roulement fonctionnant avec un jeu axial très proche de zéro et capable de supporter des charges radicales et axiales. Par extension, ce type de palier à roulement est souvent appelé « palier à roulement sans jeu ». De telles paires de roulements sont utilisées dans les applications où les roulements sont soumis à des charges axiales dans les deux sens, par exemple des roulements de boîte de vitesses ou des entraînements à vis sans fin.

La demanderesse s'est rendue compte que le procédé de fabrication de telles paires de roulements appariés présentait des inconvénients. En effet, dans un roulement conventionnel, les bagues possèdent une largeur nominale identique après le montage du roulement. Suivant le montage choisi en « O » ou en « X », la bague intérieure ou la bague extérieure doit donc être rectifiée au niveau d'au moins une de ses faces pour diminuer la largeur de la bague en question.

Une telle opération de rectification est par exemple proposée dans la demande de brevet EP 1 208 810, qui a pour objet des roulements miniatures pour machines à vitesses de rotations élevées, telles que des roulettes de dentistes. Ce document propose de réaliser ces roulements à partir de deux roulements à billes initiaux présentant une bague intérieure et une bague extérieure de largeurs sensiblement identiques. Le document propose de définir un jeu axial Ja avant usinage et une épaisseur à retirer par usinage sur la largeur des bagues, notée t. Il propose de retirer une épaisseur t inférieure à la valeur du jeu axial avant usinage Ja.

Ce document prévoit donc de procéder à un usinage sur un côté de chaque bague intérieure de deux roulements à billes destinés à être appariés, en retirant une épaisseur égale à t/2. Après cette opération d'usinage et de rectification, les deux roulements à billes sont appariés pour constituer un roulement apte à transmettre à la fois des efforts axiaux et des efforts radiaux.

Toutefois, il est nécessaire de prendre de grandes précautions pour éviter la rentrée d'abrasifs à proximité des billes durant l'opération de rectification de la face radiale et pour évacuer après la rectification les éventuelles particules abrasives qui auraient pu pénétrer dans le roulement. On peut notamment garnir le roulement de joints de protection, provisoires ou définitifs, et/ou laver abondamment le roulement après la rectification de la face radiale des bagues concernées. Ces opérations sont coûteuses et délicates tout en étant indispensables car la mise en service d'un roulement contenant des particules abrasives affecterait gravement sa durée de vie.

L'invention a notamment pour but de remédier à ces inconvénients.

L'invention a notamment pour but de simplifier et de diminuer le coût des opérations de fabrication. L'invention a notamment pour but de réduire drastiquement les risques de pollution accidentelle du roulement.

Le procédé de fabrication d'un palier à roulement comprenant une paire de roulements rigides, à partir d'un lot de roulements, chaque roulement comprenant une première bague intérieure (ou respectivement, une première bague extérieure), une deuxième bague extérieure (ou respectivement, une deuxième bague intérieure) et une rangée de billes disposées entre les bagues intérieures et extérieures, caractérisé par le fait que l'on usine et rectifie lesdites bagues pour leur conférer des dimensions définitives avant tout assemblage des roulements, de façon à réduire la largeur axiale des premières bagues du lot, par rapport à la largeur axiale des deuxièmes bagues du lot, puis on assemble une première bague, une deuxième bague et une rangée de billes pour former chaque roulement du lot, puis on mesure, en appliquant une charge axiale donnée sur une bague de chaque roulement par rapport à l'autre bague du roulement, des écarts axiaux entre les surfaces radiales de la première et de la deuxième bague du roulement, puis on apparie des roulements du lot en sélectionnant des paires de roulements ayant des écarts axiaux de valeurs absolues sensiblement identiques et de signes opposés.

L'étape de rectification postérieure au montage est supprimée. Une étape de rectification préalable au montage est mise en oeuvre. La largeur définitive des deux bagues de chaque roulement est obtenue par rectification des bagues non assemblées, l'une des deux bagues présentant une largeur nominale légèrement inférieure à celle de l'autre bague. On procède à la rectification des faces des bagues non assemblées pour leur donner leur largeur définitive. Ceci permet d'une part d'utiliser des machines de rectification de grande série identiques à celles utilisées pour des roulements standards, par exemple à bagues de largeur égale. Après la rectification, une étape de lavage est mise en oeuvre. L'assemblage des bagues est réalisé sur des chaînes de fabrication en grande série, d'où un coût d'assemblage faible. Par ailleurs, le lavage ayant lieu sur des bagues non assemblées est plus économique et plus efficace.

Dans un mode de réalisation, on fabrique un lot d'ébauches de première et deuxième bagues de largeur axiale nominale égale, préalablement à la rectification. Les première et deuxième bagues peuvent être symétriques par rapport à un plan radial.

Dans un mode de réalisation, la rectification comprend la réduction de la largeur axiale des premières bagues par rapport à la largeur axiale des deuxièmes bagues, pour tendre vers l'alignement théorique de faces radiales de la première et de la deuxième bague sur le roulement une fois assemblé compte tenu des dimensions nominales des bagues et des billes, de la charge axiale et du jeu interne prévu. Les premières bagues peuvent être symétriques par rapport à un plan radial.

Selon l'invention, après la rectification des bagues, on assemble une première bague, une deuxième bague et une rangée de billes et éventuellement une cage pour former un roulement. On mesure l'écart axial entre les surfaces radiales de la première et de la deuxième bague d'une pluralité de roulements. On apparie des roulements ayant des écarts axiaux complémentaires ou nuls. Compte tenu des dispersions inévitables de fabrication, les roulements présentent des écarts majoritairement compris dans une certaine plage, par exemple selon une courbe de Gauss. On peut apparier des roulements ayant des écarts positifs et négatifs de modules sensiblement égaux ou encore des roulements ayant des écarts sensiblement nuls.

Dans un mode de réalisation, la largeur axiale des premières bagues pour obtenir l'alignement théorique de faces radiales de la première et de la deuxième bague d'un roulement prend en compte le diamètre en fond de gorge des bagues extérieures, le diamètre en fond de gorge des bagues intérieures, le diamètre des billes, le rayon de la gorge extérieure et le rayon de la gorge intérieure.

Après l'assemblage des roulements, on mesure les écarts axiaux entre les surfaces radiales de la première et de la deuxième bague des roulements et on classe les roulements en plusieurs catégories en vue de l'appariement desdits roulements. On peut classer les roulements en trois lots, un lot à déport négatif, un lot à déport positif et un lot à déport nul. On peut apparier les roulements du lot à déport nul entre eux. On peut apparier les roulements du lot à déport positif avec les roulements du lot à déport négatif.

Dans un mode de réalisation, on applique une charge axiale sur l'une des bagues lors de la mesure des écarts axiaux. La charge axiale peut être constante pour un lot de roulements ou pour des roulements de mêmes dimensions.

Dans un mode de réalisation, l'appariement comprend la mise en contact d'une paire de roulements, face contre face.

Dans un mode de réalisation, les premières bagues sont des bagues intérieures et les deuxièmes bagues sont des bagues extérieures. On obtient ainsi un assemblage en « O ».

Dans un autre mode de réalisation, les premières bagues sont des bagues extérieures et les deuxièmes bagues sont des bagues intérieures. On obtient ainsi un appariement en « X ».

En d'autres termes, un procédé de fabrication d'une paire de roulements à gorge profonde comprend des étapes dans lesquelles :
on usine des bagues intérieures et des bagues extérieures de roulement, les bagues intérieures ayant une première largeur axiale et les bagues extérieures ayant une deuxième largeur axiale, les bagues étant rectifiées à la largeur axiale définitive pour obtenir l'alignement théorique sur un plan radial, d'une face radiale de la bague intérieure et d'une face radiale de la bague extérieure d'un roulement compte tenu des dimensions des bagues et des billes. On assemble la bague intérieure, la bague extérieure et une rangée de billes pour former un roulement. On mesure l'écart axial sous une charge axiale entre une surface radiale de la bague intérieure et une surface radiale de la bague extérieure et on apparie des roulements ayant des écarts axiaux complémentaires ou nuls.

Grâce à l'invention, on passe d'un procédé de fabrication basé sur la retouche avec reprise d'usinage de roulements conventionnels à un procédé de fabrication en série permettant la fabrication de bagues et l'assemblage de roulements qui peuvent ensuite être appariés pour obtenir un ensemble à jeu quasi nul, la reprise d'usinage devenant inutile. Le risque de pollution d'un roulement par des particules abrasives peut ainsi être très fortement réduit.

La présente invention sera mieux comprise à l'étude de la description détaillée de quelques modes de réalisation pris à titre d'exemples nullement limitatifs et illustrés par les dessins annexés, sur lesquels :
- la figure 1 est une demi-vue en coupe axiale d'un roulement à gorge profonde à simple rangée de billes ;
- la figure 2 est une demi-vue en coupe axiale d'un roulement présentant un déport négatif ;
- la figure 3 est une demi-vue en coupe axiale d'un roulement présentant un déport positif ;
- la figure 4 montre l'assemblage des roulements des figures 2 et 3 appariés en « O » ;
- la figure 5 est une demi-vue en coupe axiale d'un palier à roulement dont la bague extérieure est de largeur inférieure à la bague intérieure ;
- les figures 6 et 7 sont des demi-vues en coupe axiale de roulements à déports positif et négatif respectivement ;
- la figure 8 montre l'appariement en « X » des roulements de figures 6 et 7 ; et
- la figure 9 est un synoptique des étapes de procédé.

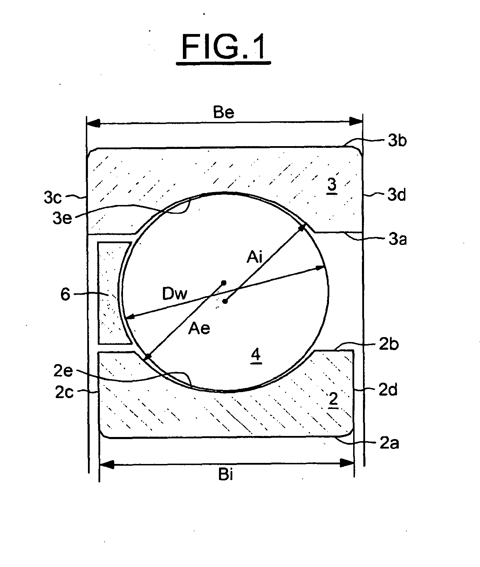

Comme on peut le voir sur la figure 1, le roulement 1 présente une bague intérieure 2, une bague extérieure 3 et une rangée de billes 4. Les billes 4 peuvent être maintenues à espacements circonférentiels réguliers par une cage 6 en matériau synthétique ou métallique. Le roulement 1 peut être utilisé tel quel ou équipé d'organes d'étanchéité, par exemple des flasques ou encore des joints frottants. La bague intérieure 2 peut être symétrique par rapport à un plan radial. La bague extérieure 3 peut être symétrique par rapport à un plan radial.

La bague intérieure 2 présente un alésage 2a, une surface extérieure 2b et des surfaces radiales opposées 2c et 2d parfois appelées surfaces frontales. A partir de la surface extérieure cylindrique 2b est ménagé un chemin de roulement 2e de forme toroïdale de rayon Aₑ en section axiale. La bague intérieure 2 présente une largeur Bᵢ axiale entre les surfaces radiales 2c et 2d. La bague extérieure 3 présente un alésage 3a, une surface extérieure 3b et deux surfaces radiales 3c et 3d également appelées surface frontales. Un chemin de roulement toroïdal 3e est ménagé à partir de l'alésage 3a pour les billes 4. Le chemin de roulement 3e présente un rayon Aᵢ en section axiale. La largeur Bₑ de la bague extérieure 3 de la surface radiale 3c à la surface radiale 3d est légèrement supérieure à la largeur Bᵢ de la bague intérieure 2. Par ailleurs, le diamètre D_{w} des billes 4 est légèrement inférieur au double du rayon Aₑ et au double du rayon Aᵢ respectivement des chemins de roulement 2e et 3e.

Le jeu axial du roulement 1, c'est-à-dire la possibilité de déplacer axialement l'une des bagues par rapport à l'autre sous l'action d'un effort axial dépend des rayons Aₑ et Aᵢ, du diamètre D_{w} des billes 4, du diamètre du chemin de roulement 3e en fond de gorge et du diamètre du chemin de roulement 2e en fond de gorge.

Pour obtenir le roulement 1, on prend des ébauches des bagues intérieure et extérieure, identiques aux ébauches utilisées pour la fabrication de roulements standards. A ce stade, les ébauches des bagues ont subi un traitement thermique leur conférant la dureté nécessaire.

Les ébauches subissent ensuite les opérations de rectification conventionnelles à savoir :
- pour les bagues extérieures : rectification des faces, du diamètre extérieur, de la gorge avec finition de la gorge par rodage,
- pour les bagues intérieures : rectification des faces, du diamètre extérieur, de la gorge avec finition de la gorge par rodage.

La rectification et le rodage des gorges se feront en fonction des lots de billes disponibles afin d'obtenir après assemblage le jeu interne souhaité.

La rectification des faces radiales des bagues, se fera pour les bagues extérieures en procédant de façon strictement identique que pour les bagues de série et en visant des largeurs de bagues Bₑ identiques aux bagues de série.

Pour les bagues intérieures, le procédé et les machines de rectification des faces sont identiques aux procédés et moyens série mais les largeurs de bagues Bᵢ visées se feront sur une valeur légèrement inférieure à celle de Bₑ et en conservant la symétrie de la bague par rapport à un plan radial passant par le centre de la gorge.

La correction de largeur de la bague intérieure Bᵢ par rapport à la largeur de la bague extérieure Bₑ sera déterminée en fonction du jeu radial visé pour les roulements de telle sorte que lorsque le roulement est assemblé, si on applique un effort axial donné sur une des faces de la bague intérieure, le déport de la face opposée par rapport à la face correspondante de la bague extérieure sera très faible en pratique et nul en théorie.

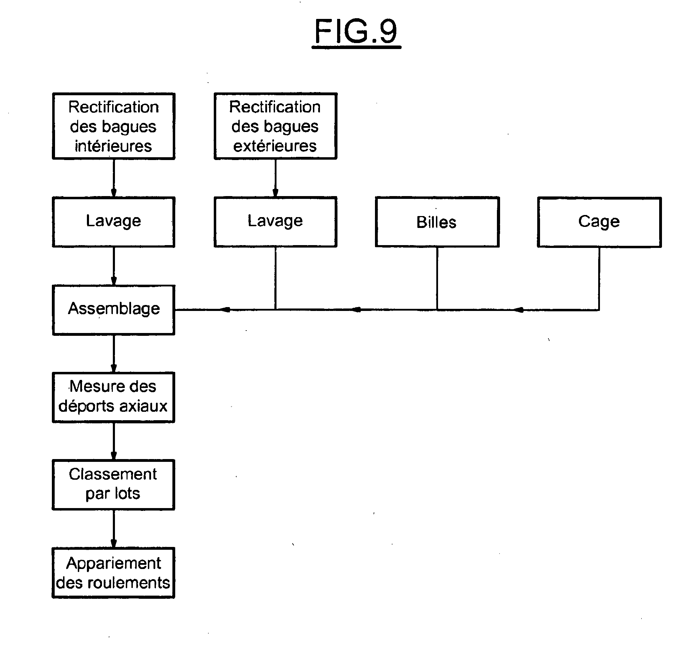

On procède ensuite à un lavage des bagues afin d'éviter que des particules métalliques ou des particules de meule ne subsistent sur lesdites bagues, voir figure 9. On procède ensuite à l'assemblage des bagues intérieure 2 et extérieure 3 et des billes 4 et le cas échéant d'une cage de maintien des billes 4 et on vérifie pour chaque roulement que le jeu radial est dans une plage prédéterminée. Les billes utilisées dans un même roulement ont un diamètre rigoureusement identique et sont choisies à l'intérieur d'un même lot.

Les lots de billes regroupent des billes de diamètres identiques mais dont la valeur absolue peut s'écarter de quelques microns par rapport à la cote nominale.

Un lot de billes 12.303 +7 par exemple, regroupera des billes dont la cote s'écarte de +7 microns de la cote nominale 12.303 mm.

On peut donc jouer sur le lot de billes utilisé pour obtenir le jeu radial ad hoc en fonction des cotes différentielles des diamètres de fond de gorge des bagues.

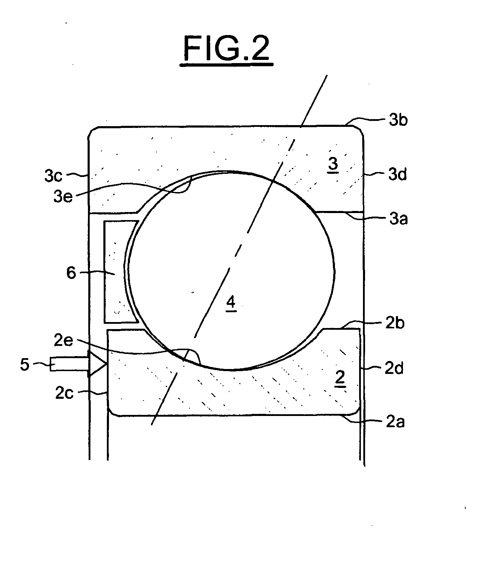

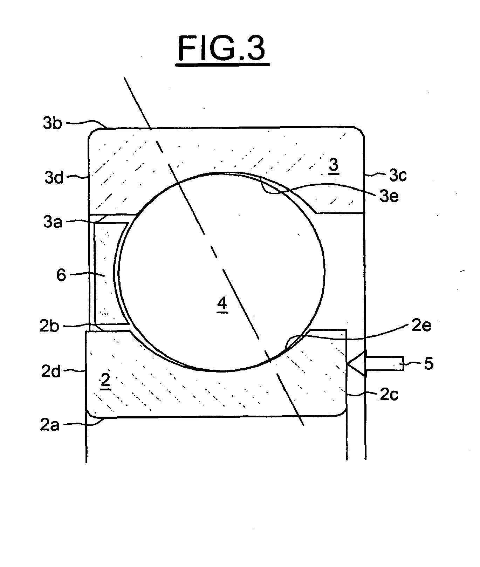

Comme illustré sur les figures 2 et 3, on applique ensuite un effort axial sur la bague intérieure 2, selon la flèche 5, par exemple en poussant sur la surface radiale 2c. On peut exercer l'effort, par un outil automatique agissant sur la face radiale 2c de la bague intérieure 2. Tout en maintenant ledit effort, on mesure la distance axiale entre la surface radiale opposée 2d de la bague intérieure 2 et la surface radiale 3d correspondante de la bague extérieure 3. Dans le cas illustré sur la figure 2, le déport ou écart est négatif en ce sens que la bague intérieure 2 reste en retrait par rapport à la bague extérieure 3 du côté des surfaces radiales 2d et 3d.

Dans le cas illustré sur la figure 3, le déport ou écart est positif en ce sens que la bague intérieure 2 est en saillie par rapport à la bague extérieure 3 du côté des surfaces radiales 2d et 3d. La surface radiale 2d est située à l'opposé des billes 4 par rapport à la surface radiale 3d.

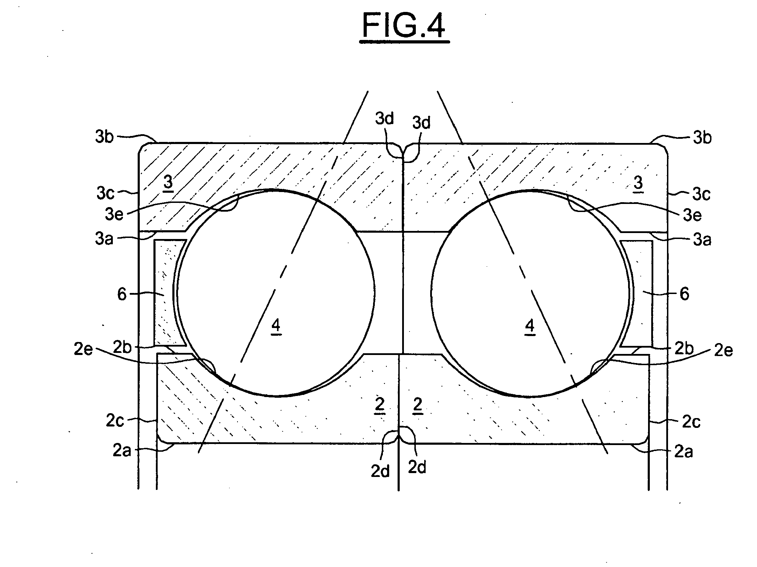

On peut mémoriser les déports mesurés, positif ou négatif, pour chaque roulement, par exemple pour chaque roulement d'un lot de fabrication. On apparie ensuite deux roulements ayant des déports de valeurs absolues proches et de signes opposés. La mesure du déport peut être effectuée sur une machine prévue à cet effet et exerçant l'effort selon la flèche 5 toujours dans le même sens. On peut ensuite apparier les roulements en fonction de leurs déports. Un roulement avec déport positif comme illustré sur la figure 3, peut par exemple être apparié avec un roulement avec déport négatif comme sur la figure 2. Une fois mis côte à côte, les roulements des figures 2 et 3 s'assemblent comme illustré sur la figure 4. Les surfaces radiales 3d des bagues extérieures 3 viennent en contact selon un premier plan radial de contact et les surfaces radiales 2d des bagues intérieures 2 viennent également en contact mais selon un second plan de contact parallèle au premier. On obtient un assemblage dit en « O » de par le dessin formé par les angles de contact.

En d'autres termes, la largeur définitive des deux bagues d'un roulement est obtenue par rectification des bagues non assemblées, l'une des deux bagues étant d'une largeur nominale légèrement inférieure à celle de l'autre bague. On confère ainsi la largeur définitive des bagues avant leur assemblage, ce qui permet d'utiliser des machines de rectification des faces en série. Les bagues sont ensuite lavées puis assemblées sur des chaînes de fabrication en grande série. La largeur Bᵢ des bagues intérieures est déterminée de telle sorte qu'en fonction du jeu moyen visé ultérieurement sur le roulement assemblé et des valeurs des rayons des gorges, on obtienne sur le roulement monté la face de la bague intérieure qui vient sensiblement au niveau de la face de la bague extérieure si on applique à la bague intérieure la charge axiale prévue. La différence de largeur entre les bagues intérieure et extérieure est relativement faible et intervient lors de la rectification des faces. On peut par exemple prévoir une différence de largeur de l'ordre de 0,3 mm pour une largeur nominale de 21 mm. Cette différence de largeur évite une modification du procédé de fabrication lors des étapes préalables. Ainsi, les ébauches tournées qui subissent ensuite un traitement thermique avant de subir l'opération de rectification peuvent être rigoureusement identiques aux ébauches de bagues de série. De même, les machines et méthodes utilisées pour rectifier les bagues intérieures spéciales peuvent être rigoureusement identiques à celles des séries conventionnelles et n'entraînent donc pas de surcoût.

Quand les roulements sont montés avec ces bagues intérieures 2 courtes, on obtient des lots de roulements qui compte tenu des dispersions de fabrication, contiennent des roulements dont la bague intérieure est en déport positif, voir figure 3, par rapport à la face de la bague extérieure, d'autres dont la bague intérieure est en déport négatif, voir figure 2, par rapport à la face de la bague extérieure et enfin d'autres dont la bague intérieure est en déport nul, les surfaces radiales 2d et 3d étant coplanaires.

Après l'assemblage des roulements, on mesure les déports, on constitue des lots de roulements avec déport positif, des lots de roulements avec déport négatif et éventuellement des lots de roulements à déport nul. Les roulements peuvent être marqués d'un repère permettant leur orientation par rapport au déport mesuré. On apparie ensuite les roulements. Par exemple les roulements à déport positif avec les roulements à déport négatif ou encore les roulements à déport positif avec les roulements à déport négatif et les roulements à déport nul entre eux. On mesure le jeu axial de la paire de roulements appariés afin de vérifier que le jeu est sensiblement nul tout en admettant une certaine tolérance relativement faible, par exemple un jeu axial compris entre ± 4 microns, la borne+ traduisant l'existence d'un jeu positif et la borne- l'existence d'un jeu négatif c'est-à-dire d'une précontrainte.

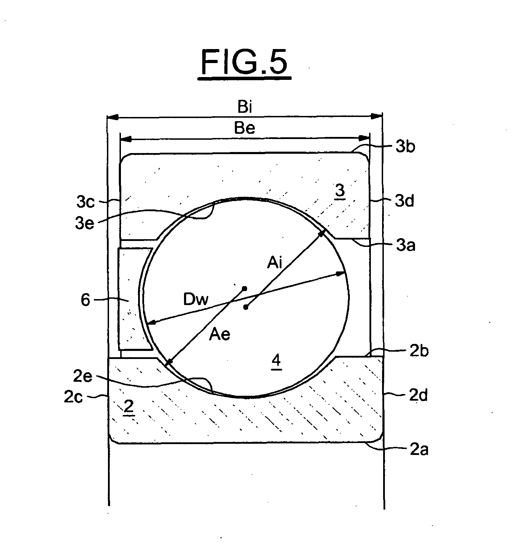

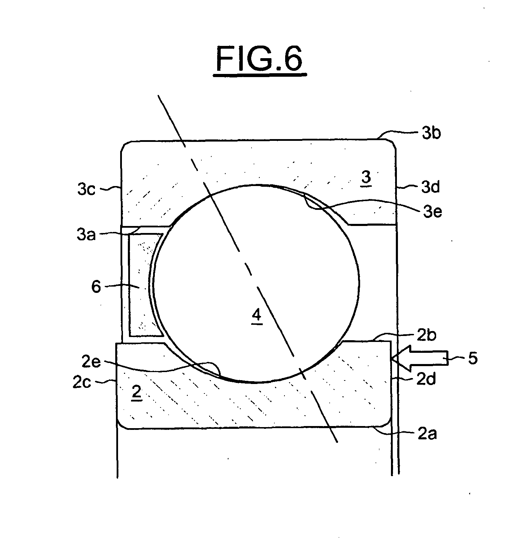

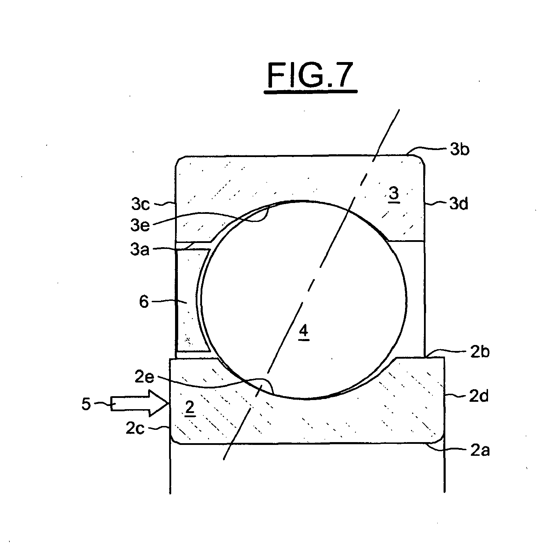

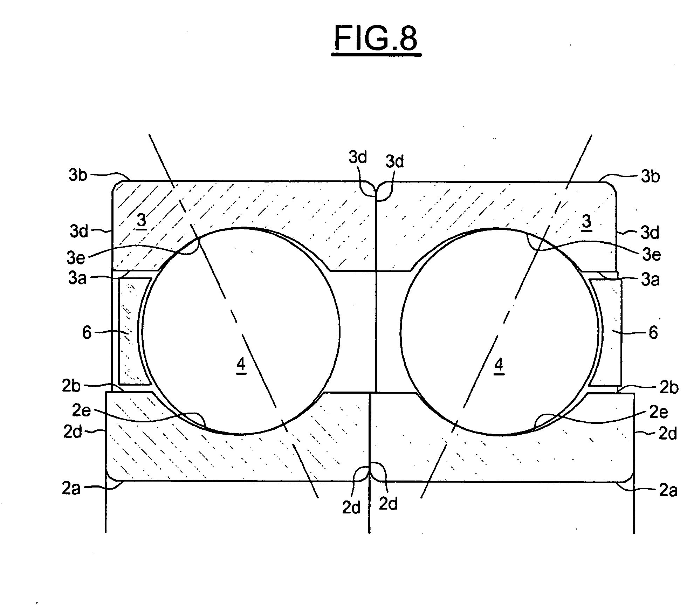

Dans le mode de réalisation correspondant aux figures 5 à 8, les références des éléments semblables ont été conservées. La bague extérieure 3 présente une largeur Bₑ inférieure à la largeur Bᵢ de la bague intérieure 2, voir figure 5. Comme illustré sur les figures 6 et 7, on exerce un effort selon la flèche 5 sur la face radiale 2d de la bague intérieure 2 des roulements pour déterminer des roulements à déport négatif et des roulement à déport positif, puis on assemble un roulement à déport positif et un roulement à déport négatif comme illustré sur la figure 8. L'on voit que le plan radial de contact entre les faces radiales 3d des bagues extérieures 3 est parallèle au plan radial de contact entre les faces radiales 2d des bagues intérieures 2. Dans le cas de roulements à déport nul, ces plans de contact sont confondus. On obtient une paire de roulements à appariement en « X », les points de contact entre les billes et les chemins de roulement définissant une telle forme.

Grâce à l'invention, on passe d'un procédé de fabrication basé sur la retouche avec reprise d'usinage de la bague sur roulement monté générateur de surcoûts et de risques de pollution à un procédé de fabrication de série permettant la fabrication de bagues spéciales avec des équipements de série et l'assemblage de roulements qui peuvent ensuite être appariés pour obtenir un ensemble à jeu extrêmement faible. On peut ainsi éviter les reprises d'usinage.

## Revendications

1. Procédé de fabrication d'un palier à roulement comprenant une paire de roulements rigides, à partir d'un lot de roulements, chaque roulement (1) comprenant une première bague (2) intérieure ou respectivement, une première bague extérieure, une deuxième bague (3) extérieure ou respectivement, une deuxième bague intérieure et une rangée de billes (4) disposées entre les bagues intérieures et extérieures, **caractérisé par le fait que** l'on usine et rectifie lesdites bagues pour leur conférer des dimensions définitives avant tout assemblage des roulements, de façon à réduire la largeur axiale des premières bagues (2) du lot, par rapport à la largeur axiale des deuxièmes bagues (3) du lot, puis on assemble une première bague, une deuxième bague et une rangée de billes pour former chaque roulement (1) du lot, puis on mesure, en appliquant une charge axiale donnée sur une bague de chaque roulement par rapport à l'autre bague du roulement, des écarts axiaux entre les surfaces radiales de la première et de la deuxième bague du roulement, puis on apparie des roulements du lot en sélectionnant des paires de roulements ayant des écarts axiaux de valeurs absolues sensiblement identiques et de signes opposés.

2. Procédé selon la revendication 1, dans lequel on fabrique des ébauches de première et deuxième bagues de largeur axiale nominale égale, préalablement à la rectification.

3. Procédé selon la revendication 1 ou 2, dans lequel la rectification comprend la réduction de la largeur axiale des premières bagues (2) par rapport aux secondes bagues (3) pour tendre vers l'alignement théorique des faces radiales (2d, 3d) de la première et de la deuxième bagues sur le roulement (1) une fois assemblé compte tenu des dimensions des bagues et des billes (4), de la charge axiale et du jeu interne prévu.

4. Procédé selon l'une quelconque des revendications précédentes, dans lequel après l'assemblage des roulements, on mesure les écarts axiaux entre les surfaces radiales (2d, 3d) de la première et de la deuxième bague des roulements, et on classe les roulements en plusieurs catégories en vue de l'appariement desdits roulements.

5. Procédé selon l'une quelconque des revendications précédentes, dans lequel l'appariement comprend la mise en contact d'une paire de roulements face contre face.

6. Procédé selon l'une quelconque des revendications précédentes, dans lequel les premières bagues sont des bagues intérieures et les deuxièmes bagues sont des bagues extérieures.

7. Procédé selon l'une quelconque des revendications 1 à 5, dans lequel les première bagues sont des bagues extérieures et les deuxièmes bagues sont des bagues intérieures.

8. Procédé selon l'une quelconque des revendications précédentes, dans lequel les bagues (2, 3) sont lavées avant l'assemblage du roulement.

## Patentansprüche

1. Verfahren zur Herstellung eines ein Paar von starren Lagern enthaltenden Wälzlagers ausgehend von einem Satz von Lagern, wobei jedes Lager (1) einen ersten Innenring (2) bzw. einen ersten Außenring, einen zweiten Außenring (3) bzw. einen zweiten Innenring und eine Reihe von Kugeln (4) enthält, die zwischen den Innen- und Außenringen angeordnet sind, **dadurch gekennzeichnet, dass** die Ringe maschinell bearbeitet und feingeschliffen werden, um ihnen vor jedem Zusammenbau der Lager endgültige Abmessungen zu verleihen, um die axiale Breite der ersten Ringe (2) des Satzes bezüglich der axialen Breite der zweiten Ringe (3) des Satzes zu verringern, dann ein erster Ring, ein zweiter Ring und eine Reihe von Kugeln zusammengebaut werden, um jedes Lager (1) des Satzes zu bilden, dann, indem eine gegebene axiale Last an einen Ring jedes Lagers bezüglich des anderen Rings des Lagers angewendet wird, axiale Abstände zwischen den radialen Flächen des ersten und des zweiten Rings des Lagers gemessen werden, dann Lager des Satzes gepaart werden, indem Lagerpaare ausgewählt werden, die axiale Abstände mit im Wesentlichen gleichen Absolutwerten und entgegengesetzten Vorzeichen haben.

2. Verfahren nach Anspruch 1, wobei Rohlinge erster und zweiter Ringe gleicher axialer Nennbreite vor dem Feinschleifen hergestellt werden.

3. Verfahren nach Anspruch 1 oder 2, wobei das Feinschleifen die Verringerung der axialen Breite der ersten Ringe (2) bezüglich der zweiten Ringe (3) enthält, um die theoretische fluchtende Ausrichtung der radialen Seiten (2d, 3d) des ersten und des zweiten Rings im zusammengebauten Lager (1) unter Berücksichtigung der Abmessungen der Ringe und der Kugeln (4), der axialen Last und des vorgesehenen inneren Spiels anzustreben.

4. Verfahren nach einem der vorhergehenden Ansprüche, wobei nach dem Zusammenbau der Lager die axialen Abstände zwischen den radialen Flächen (2d, 3d) des ersten und des zweiten Rings der Lager gemessen und die Lager in mehrere Kategorien zur Paarung der Lager eingestuft werden.

5. Verfahren nach einem der vorhergehenden Ansprüche, wobei die Paarung das Inkontaktbringen eines Paars von Lagern Seite gegen Seite enthält.

6. Verfahren nach einem der vorhergehenden Ansprüche, wobei die ersten Ringe Innenringe und die zweiten Ringe Außenringe sind.

7. Verfahren nach einem der Ansprüche 1 bis 5, wobei die ersten Ringe Außenringe und die zweiten Ringe Innenringe sind.

8. Verfahren nach einem der vorhergehenden Ansprüche, wobei die Ringe (2, 3) vor dem Zusammenbau des Lagers gewaschen werden.

## Claims

1. Method for manufacturing a rolling bearing comprising a pair of rigid bearings, from a batch of bearings, each bearing (1) comprising a first inner ring (2) or, respectively, a first outer ring, a second outer ring (3) or, respectively, a second inner ring and a row of balls (4) arranged between the inner and outer rings, **characterized in that** the said rings are machined and ground in order to give them final dimensions before any assembly of the bearings, so as to reduce the axial width of the first rings (2) of the batch, with respect to the axial width of the second rings (3) of the batch, then a first ring, a second ring and a row of balls are assembled to form each bearing (1) of the batch, then axial spacings between the radial surfaces of the first and the second ring of the bearing are measured by applying a given axial load on a ring of each bearing with respect to the other ring of the bearing, and then bearings of the batch are paired by selecting pairs of bearings having axial spacings of substantially identical absolute values of opposite signs.

2. Method according to Claim 1, in which blanks of first and second rings of equal nominal axial width are manufactured prior to the grinding operation.

3. Method according to Claim 1 or 2, in which the grinding operation comprises the reduction of the axial width of the first rings (2) with respect to the second rings (3) so as to tend towards the theoretical alignment of the radial faces (2d, 3d) of the first and the second rings on the bearing (1) once assembled taking account of the dimensions of the rings and the balls (4), the axial load and the internal clearance provided.

4. Method according to any one of the preceding claims, in which, after assembly of the bearings, the axial spacings between the radial surfaces (2d, 3d) of the first and the second ring of the bearings are measured, and the bearings are classified into a plurality of categories for the purpose of pairing the said bearings.

5. Method according to any one of the preceding claims, in which the pairing comprises placing a pair of bearings in contact face against face.

6. Method according to any one of the preceding claims, in which the first rings are inner rings and the second rings are outer rings.

7. Method according to any one of claims 1 to 5, in which the first rings are outer rings and the second rings are inner rings.

8. Method according to any one of the preceding claims, in which the rings (2, 3) are washed before the assembly of the bearing.
